(19) Europäisches Patentamt
European Patent Office
Office européen des brevets

(11) **EP 2 534 642 B1**

(12) **FASCICULE DE BREVET EUROPEEN**

(45) Date de publication et mention
de la délivrance du brevet:
**25.12.2013 Bulletin 2013/52**

(51) Int Cl.:
***G01J 1/44*** *(2006.01)*     ***G01J 1/02*** *(2006.01)*
***G06T 7/20*** *(2006.01)*

(21) Numéro de dépôt: **11702230.1**

(22) Date de dépôt: **04.02.2011**

(86) Numéro de dépôt international:
**PCT/EP2011/051687**

(87) Numéro de publication internationale:
**WO 2011/098410 (18.08.2011 Gazette 2011/33)**

(54) **DISPOSITIF POUR METTRE A JOUR UN MODELE PHOTOMETRIQUE**

VORRICHTUNG ZUR AKTUALISIERUNG EINES FOTOMETRISCHEN MODELLS

DEVICE FOR UPDATING A PHOTOMETRIC MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2010 FR 1000526**

(43) Date de publication de la demande:
**19.12.2012 Bulletin 2012/51**

(73) Titulaire: **Commissariat à l'Énergie Atomique et aux Énergies Alternatives**
**75015 Paris (FR)**

(72) Inventeur: **DHOME, Yoann**
**F-92160 Antony (FR)**

(74) Mandataire: **Bordier, Sylvain**
**Marks & Clerk France**
**Conseils en Propriete Industrielle**
**Immeuble Visium**
**22 avenue Aristide Briand**
**94117 Arcueil Cedex (FR)**

(56) Documents cités:
**US-A- 4 903 192     US-A- 5 043 862**
**US-A- 5 825 478     US-A1- 2007 280 540**

- **TIL AACH ET AL: "STATISTICAL MODEL-BASED CHANGE DETECTION IN MOVING VIDEO", SIGNAL PROCESSING, ELSEVIER SCIENCE PUBLISHERS B.V. AMSTERDAM, NL LNKD- DOI: 10.1016/0165-1684(93)90063-G, vol. 31, no. 2, 1 mars 1993 (1993-03-01), pages 165-180, XP000345437, ISSN: 0165-1684**
- **RADKE R. J., AL-KOFAHI O., ROYSAM B.: "Image Change Detection Algorithms: A Systematic Survey", IEEE TRANSACTIONS ON IMAGE PROCESSING, vol. 14, no. 3, mars 2005 (2005-03), pages 294-307, XP002602265,**

**Description**

La présente invention concerne un dispositif pour mettre à jour un modèle photométrique. Elle s'applique notamment dans le domaine de la vidéosurveillance par caméra fixe, plus particulièrement dans le domaine de la soustraction de fond en analyse automatisée des flux vidéo. Il s'agit essentiellement de repérer automatiquement des objets se déplaçant dans un flux vidéo.

De nombreuses applications de traitement d'images cherchent à détecter des évènements dans les flux vidéo. Une technique classique consiste à modéliser d'un point de vue photométrique l'apparence de la scène vide, qui sera appelée modèle du fond par la suite. Un exemple est disenté dans US 2007/280540 A1 (IKEDA HIROO [JP]). Tout objet mobile apparaissant dans l'image présente alors des incohérences par rapport à ce modèle du fond et peut ainsi être détecté.

Les techniques actuelles proposent de modéliser le fond au niveau des pixels ou par blocs de pixels. Dans une première phase, sur chaque pixel ou bloc de pixels, un certain nombre de paramètres sont calculés pour coder l'information localement. Il s'agit de paramètres de couleur, de texture ou encore d'orientation du gradient. Lors d'une seconde phase dite de segmentation des objets d'intérêt, l'image courante est comparée au modèle précédemment créé, les zones révélant des différences étant associées à de probables objets d'intérêt. Par exemple, une caméra fixe peut être utilisée pour faire de l'analyse de trafic routier. Un modèle de la route vide et des bas cotés est construit, qui consiste en la description de chaque pixel ou bloc de pixels de l'image. Lorsque des véhicules entrent dans le champ de vue de la caméra, les pixels correspondant aux véhicules sont différents de ceux ayant permis d'élaborer le modèle. La différence entre l'image et le modèle, obtenue par "soustraction de fond", permet la détection et la segmentation des véhicules.

Outre les problèmes de sensibilité empêchant de détecter des objets aux propriétés photométriques proches de leur environnement, comme un véhicule gris sur une route grise, une autre difficulté réside dans la mise à jour du modèle de fond. En effet, des variations de la luminosité ambiante créent des différences entre l'image courante et le modèle, sans pour autant que des objets d'intérêt soient présents. Les variations de la luminosité ambiante sont habituellement dues aux changements d'ensoleillement, aux passages nuageux, aux précipitations ou encore à l'action du vent. Il faut intégrer ces changements, c'est-à-dire mettre à jour le modèle dynamiquement pour l'adapter aux variations de la scène observée tout en maintenant le niveau de performance de la détection.

Dans des tentatives pour résoudre ce problème, plusieurs approches proposent d'utiliser, pour modéliser le fond et encoder la variabilité de chaque paramètre, un modèle appelé "mélange de gaussiennes", ce modèle incluant plusieurs modèles gaussiens ayant chacun une moyenne et une variance. Ces systèmes statistiques fonctionnent plutôt bien et supportent des variations raisonnables comme les variations de la luminosité au cours de la journée ou le mouvement du vent dans un arbre. Mais, une difficulté réside dans la vitesse de mise à jour de ces modèles gaussiens pour suivre des variations plus importantes, la théorie sous-jacente à ces approches étant basée sur une mise à jour lente et régulière du modèle gaussien. Ainsi, ces systèmes n'arrivent actuellement pas à gérer les effets d'événements tel que les passages nuageux ou les chutes de neige.

Dans une tentative pour résoudre ce problème, F. Porikli décrit dans un article intitulé "Human body tracking by adaptive background models and mean-shift analysis" une méthode dans laquelle la mise à jour d'un unique modèle gaussien, représentant le fond de la scène observée, est dépendante de "l'activité" dans l'image, autrement dit de la variabilité dans le temps de la scène. L'auteur, pour évaluer cette "activité", définit un critère de changement de luminosité dans l'image. Au dessus d'un seuil préalablement fixé, un coefficient d'apprentissage est modifié proportionnellement au changement de luminosité. Malheureusement, cette approche comporte deux défauts majeurs. Tout d'abord, le critère de changement de luminosité est calculé sur l'ensemble de l'image. Or dans le cas de passage nuageux par exemple, la variation de luminosité n'est pas globale mais locale dans la scène et donc dans l'image. En outre, le principe même de seuil à partir duquel le coefficient d'apprentissage est modifié pose problème puisqu'il est déterminé empiriquement et donc subjectivement sans règle ni critère théorique auquel se raccrocher.

L'invention a notamment pour but de pallier aux inconvénients précités. Elle part du constat que les modèles gaussiens couramment utilisé pour modéliser le fond sont des modèles probabilistes. A ce titre, pour refléter une certaine réalité, il est nécessaire de respecter les fondamentaux des mathématiques probabilistes. Ainsi, pour pouvoir être considéré comme pertinent, un modèle gaussien doit modéliser suffisamment de données. A l'inverse, un modèle gaussien doit aussi s'adapter suffisamment rapidement pour garder sa pertinence suite à des changements importants de l'illumination dans la scène modélisée.

D'une part, le coefficient d'apprentissage ne doit donc pas être fixe, mais il doit s'adapter en fonction des variations des données entrantes, tout en tenant compte de l'historique. D'autre part, même si dans certains cas les variations d'illumination à modéliser sont globales, dans de nombreux cas il s'agit de phénomènes locaux. La vitesse de mise à jour du modèle doit donc dépendre de paramètres locaux.

Sur la base de ce double constat, l'invention propose une stratégie de mise à jour d'un modèle gaussien qui est dépendante de la dynamique locale de la scène et donc plus propice à répondre à des changements rapides de luminosité. A cet effet, l'invention a pour objet un dispositif pour mettre à jour un modèle photométrique d'une scène de fond observée par une caméra. Le modèle photométrique inclut au moins un modèle gaussien d'une grandeur physique mesurable dans un pixel ou dans un bloc de pixels d'une image fournie par la caméra. Le modèle gaussien est défini par la moyenne et la variance de la grandeur physique. Le dispositif comporte des moyens pour calculer la moyenne à partir de la valeur courante de la grandeur physique mesurée dans le pixel ou le bloc de pixels de l'image, ces moyens incluant un premier sommateur monté en boucle fermée. Le dispositif comporte également des moyens pour mesurer l'écart entre la moyenne et la valeur courante de la grandeur physique, ces moyens incluant un deuxième sommateur. Le dispositif comporte aussi des moyens pour réduire l'écart, ces moyens incluant un régulateur automatique. Le premier sommateur, le deuxième sommateur et le régulateur automatique sont assemblés dans une boucle fermée d'asservissement du premier sommateur, de manière à mettre à jour le modèle lentement en période de stabilité de la scène observée et rapidement en période de transition de la scène observée. Ainsi, le modèle reste fidèle à la scène observée quelle que soit la vitesse de fluctuation de la grandeur physique. Le régulateur automatique inclut un régulateur PI (Proportionnel-Intégrateur) ou PD (Proportionnel-Dérivateur) ou PID (Proportionnel-Intégrateur-Dérivateur).

Par exemple, la caméra pouvant être fixe, le dispositif peut comporter des moyens pour soustraire le modèle photométrique à l'image fournie par la caméra, de manière à détecter, dans ladite image, des évènements superposés à la scène de fond.

Par exemple, la grandeur physique peut être la luminosité ou une composante couleur.

Par exemple, le régulateur PID peut être réglé par la méthode de Takahashi.

Dans un autre mode de réalisation préférentielle, le régulateur automatique peut inclure un correcteur proportionnel, un correcteur PID et au moins un sélecteur pour commuter vers le correcteur proportionnel pendant les périodes de stabilité de la scène observée et commuter vers le correcteur PID pendant les périodes de transition de la scène observée.

Avantageusement, le sélecteur peut commuter vers le correcteur PID si un événement improbable est détecté et commuter vers le correcteur proportionnel si aucun événement improbable n'est détecté durant un intervalle de temps prédéterminé. Par exemple, un évènement improbable peut être un évènement ayant une probabilité d'occurrence inférieure à un seuil prédéterminé.

Outre le fait de maintenir le modèle de fond pertinent malgré les changements de luminosité et ainsi de permettre d'utiliser le modèle de fond dans la durée, l'invention a encore pour principaux avantages qu'elle autorise des systèmes de soustraction de fond robustes et fiables, simples de conception et ne nécessitant pas d'étalonnage préalable et de façon empirique d'une multitude de seuils et de paramètres.

D'autres caractéristiques et avantages de l'invention apparaîtront à l'aide de la description qui suit faite en regard des dessins annexés que représentent :

- la figure 1, par un synoptique, un exemple de mise en oeuvre d'un dispositif classique d'asservissement;
- la figure 2, par un synoptique, les principes d'un dispositif d'asservissement d'un modèle de fond selon l'invention;

Si le choix de modéliser un signal bruité comme un flux vidéo par une gaussienne simple, caractérisée par sa moyenne et sa variance, est une idée pertinente à première vue, l'étude de séquences vidéos multiples conduit à remettre en cause ce principe. En effet, des variations brusques de diverses grandeurs physiques peuvent être observées, qu'il s'agisse par exemple de variations linéaires ou par palliers de la luminosité ou encore des composantes couleurs RGB (Red, Green, Blue) ou HSV (Hue, Saturation and Value), qui ne peuvent être modélisées par une telle approche. Ainsi, l'hypothèse selon laquelle le modèle idéal pour modéliser le fond d'une séquence est un modèle gaussien n'est pas exacte en permanence.

Deux types de périodes bien distinctes au cours du temps peuvent être identifiées dans les signaux vidéo. Les premières, qui seront appelées par la suite périodes de "stabilité" de la scène observée, sont parfaitement modélisables par un modèle gaussien. Les secondes, qui seront appelées par la suite périodes de "transition" de la scène observée, englobent tous les moments de fortes variations. Un but de l'invention est de répondre à cette dualité, en mettant le modèle de fond à jour lentement en période de stabilité et rapidement en période de transition. Pour cela, l'invention propose de considérer le fond, que l'on souhaite "modéliser au mieux", comme une entité évolutive sur laquelle on asservit un modèle gaussien grâce à l'information apportée par chaque image. La mise à jour peut ainsi être vue comme un problème d'asservissement en automatique. En automatique, un asservissement est un procédé dont l'objet principal est de stabiliser et d'améliorer la réaction d'un système par rapport à sa consigne. Le principe de base d'un système d'asservissement est de mesurer l'écart entre la valeur réelle de la grandeur physique à asservir et une valeur de consigne que l'on souhaite atteindre, et de calculer la commande appropriée appliquée à un ou à des actionneurs, de façon à réduire cet écart.

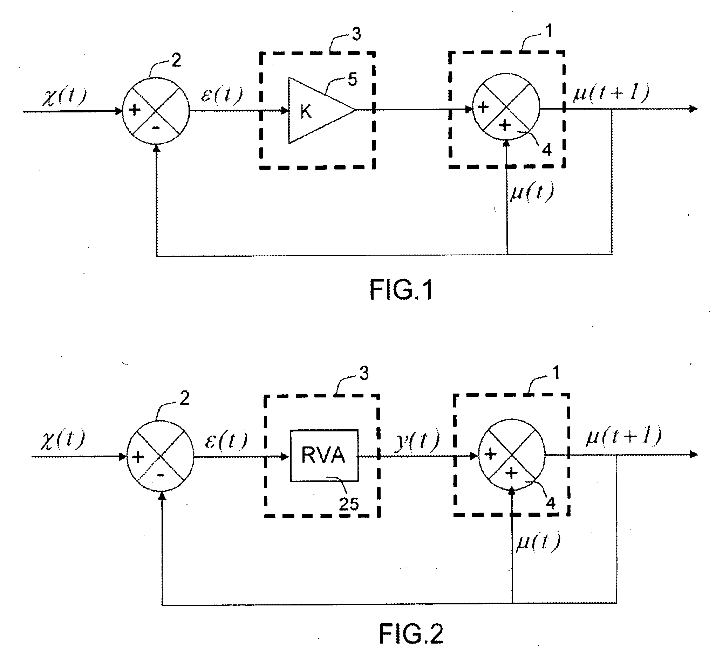

La figure 1 illustre par un synoptique un exemple de mise en oeuvre d'un dispositif classique pouvant être utilisé pour asservir un système 1 pouvant avantageusement comporter un sommateur 4, le sommateur 4 pouvant être monté en boucle fermée (sa sortie et son entrée étant connectées directement) de manière à calculer la moyenne

pondérée μ de la gaussienne des échantillons qu'il reçoit. Ainsi, le système 1 peut être utilisé pour implémenter un modèle de fond. Avantageusement là encore, le système 1 peut lui-même être assemblé dans une boucle d'asservissement fermée à l'aide d'un sommateur 2. Ainsi, à l'instant *t* courant, la boucle d'asservissement reçoit en entrée du sommateur 2 un échantillon χ(*t*). A l'instant *t* + 1, la boucle d'asservissement fournit en sortie du système 1 la moyenne pondérée de la gaussienne des échantillons jusqu'à l'instant *t*, cette moyenne étant notée μ(*t* + 1). Le sommateur 2 fournit en sortie l'erreur à l'instant *t* courant entre l'échantillon χ(*t*) à l'instant *t* et la moyenne pondérée des échantillons jusqu'à l'instant *t*, cette erreur étant notée ε(*t*). Autrement dit, ε(*t*) = χ(*t*) - μ(*t*). La boucle fermée d'asservissement comporte également un dispositif de correction 3, qui comporte un correcteur proportionnel 5 de coefficient d'apprentissage k disposé de manière à recevoir ε(*t*) en entrée. Le correcteur proportionnel 5 permet de corriger l'erreur ε(*t*) de telle sorte que μ(*t* + 1) = μ(*t*) + *y*(*t*) où *y*(*t*) = *k* * ε(*t*) est le terme de correction.

Les inconvénients d'un tel dispositif comportant seulement un correcteur proportionnel sont connus, notamment ses temps de réponse limités et la persistance d'une erreur statique. En effet, la nouvelle donnée entrante, multipliée par un coefficient pondérateur, est incorporée à la gaussienne à l'aide d'une simple addition. Du coup, ce modèle est peu efficace lorsque le système 1 est un modèle de fond, tout spécialement pendant ses périodes de transition. En effet, si le coefficient pondérateur k, réglé empiriquement, est trop faible, il ne peut suivre les variations rapides que l'on peut observer dans un flux vidéo. A l'inverse, un coefficient k trop fort met à mal la cohérence du modèle, tant du point de vue théorique que des résultats pratiques, le modèle dérivant trop aisément. A partir de ce constat, la présente invention propose de remplacer le correcteur proportionnel 5 par un module plus complexe, permettant de mettre à jour un modèle de fond lentement en période de stabilité et rapidement en période de transition, comme illustré par la suite.

La figure 2 illustre par un synoptique les principes d'un dispositif selon l'invention pour asservir le système 1 qui implémente un modèle de fond, de manière à mettre à jour le modèle lentement en période de stabilité et rapidement en période de transition. Il peut s'agir d'utiliser avantageusement, à la place du correcteur proportionnel 5 illustré dans la figure 1, un module 25 de régulation de la vitesse d'apprentissage, qui sera appelé simplement "RVA" par la suite pour "régulateur de la vitesse d'apprentissage". Le RVA 25 selon l'invention peut être implémenté de diverses manières à partir de régulateurs automatiques. Comme explicité par la suite, le RVA 25 peut avantageusement être réalisé à partir d'un correcteur Proportionnel-Intégrateur-Dérivateur (PID). Mais le RVA 25 peut également être réalisé à partir d'une commande à modèle interne, d'une commande par retour d'état, d'un correcteur RST, d'une commande linéaire quadratique (LQ), d'une commande linéaire quadratique gaussienne (LQG) ou encore d'une commande H infini. Le RVA 25 peut également être réalisé à partir d'une commande prédictive se basant sur l'utilisation d'un modèle dynamique du système pour anticiper son comportement futur. Le RVA 25 peut également être réalisé à partir d'une commande robuste permettant de garantir la stabilité par rapport aux perturbations et aux erreurs de modèle. Le RVA 25 peut également être réalisé à partir d'une commande adaptative qui effectue une identification en temps réel pour actualiser le modèle du système. Le RVA 25 peut également être réalisé à partir d'un réseau de neurones ou d'un système expert. Le RVA 25 peut également être réalisé à partir de contrôleurs non linéaires utilisant la théorie d'Aleksandr Lyapunov, comme les commandes linéarisantes ou la commande par modes glissants. Le RVA 25 peut également être réalisé à partir d'une commande par platitude différentielle, qui permet d'inverser le modèle sans passer par l'intégration des équations différentielles, et ainsi de calculer les signaux nécessaires sur les entrées pour garantir les trajectoires voulues en sortie. Dans tous les modes de réalisation de l'invention, il s'agit d'asservir le modèle de fond gaussien à partir de l'information apportée par chaque image, grâce à un régulateur tiré du monde de l'automatique. Ainsi, il peut s'agir, comme dans l'exemple de réalisation préférentiel qui suit, d'un régulateur basé sur un correcteur PID. Mais il n'échappera pas à l'homme du métier que le correcteur PID de l'exemple de réalisation qui suit peut être remplacé par un correcteur plus simple, comme un correcteur PI ou un correcteur PD, ceci sans déroger aux principes de l'invention.

Dans un exemple de dispositif d'asservissement selon l'invention le RVA 25 peut être avantageusement implémenté à partir d'un correcteur PID. Les correcteurs PID sont connus pour leurs bonnes performances de correction et leur robustesse. Le terme d'erreur ε(*t*) n'est plus simplement multiplié par une constante mais par trois effets distincts, l'équation de mise à jour étant la suivante :

$$\mu_{n+1} = \mu_n + k_p \left( \varepsilon_n + k_i \sum_{k=-\infty}^{n} \varepsilon_k + k_d \frac{d\varepsilon_n}{dn} \right)$$

avec $\varepsilon_n = x_n - \mu_n$

Trois actions sont appliquées pour corriger l'estimation de la moyenne μ. Le terme proportionnel de coefficient $k_p$ a le même effet que le taux d'apprentissage k de la figure 1. Il apporte la correction principale. L'effet dérivé de coefficient $k_p.k_d$ permet à l'algorithme de réagir rapidement à l'apparition d'une perturbation. Lorsque les données présentent une évolution rapide, le terme de dérivée est important. Cette action permet d'obtenir une évolution rapide lorsqu'une erreur importante apparaît. Enfin l'action intégrale de coefficient $k_p.k_i$ est une action à long terme. En théorie elle assure asymptotiquement l'annulation de l'erreur. Cette action permet ainsi d'éliminer l'erreur statique. Dans le présent exemple de réalisation, cette action permet d'éliminer l'erreur de longue durée entre les données et la moyenne μ.

Le choix des coefficients $k_p$, $k_i$ et $k_d$ est important. En effet, un mauvais réglage peut entrainer des réponses instables. Dans le présent exemple de réalisation, la méthode d'identification et de réglage de Takahashi peut avantageusement être utilisée pour choisir $k_p$, $k_i$ et $k_d$. En effet, cette méthode permet, à partir d'essais d'identification simples, de déterminer des réglages de coefficients dont les propriétés sont connues. En particulier cette méthode est reconnue pour fournir une réponse rapide et stable.

Dans un autre exemple de dispositif d'asservissement selon l'invention, le RVA 25 peut être avantageusement implémenté à partir d'un correcteur proportionnel couplé à un correcteur PID. Comme explicité précédemment, les signaux vidéos comportent des périodes de stabilité et des périodes de transition. Dans le présent exemple de réalisation, le correcteur proportionnel gère la mise à jour du modèle de fond en période stable, alors que le correcteur PID gère la mise à jour du modèle de fond en période de transition. Le couplage du correcteur proportionnel et du correcteur PID peut être réalisé grâce à des modules de sélection, qui seront simplement appelés "sélecteurs" par la suite. Au vu de l'état du système 1 et des données entrantes $x(t)$, les sélecteurs permettent d'utiliser l'un ou l'autre des deux correcteurs.

Les sélecteurs peuvent avantageusement définir le correcteur à utiliser, c'est-à-dire le correcteur proportionnel ou le correcteur PID, en fonction de la situation: en période de stabilité la mise à jour peut s'effectuer à l'aide du correcteur proportionnel, alors qu'en période de transition elle peut s'effectuer à l'aide du correcteur PID. Pour faire ce choix, les sélecteurs peuvent avantageusement se baser sur des règles de probabilité. Le fonctionnement par défaut peut être l'utilisation du correcteur proportionnel. Le modèle gaussien utilisé pour modéliser le fond est alors valable. Le basculement peut se faire lorsque le modèle gaussien est pris en défaut en termes statistiques. Par exemple, un seuil de détection peut être arbitrairement fixé à 1/1000. Ainsi, les sélecteurs peuvent considérer que si un événement improbable, par exemple ayant moins d'une chance sur 1000 d'apparaître, est détecté, alors le modèle gaussien est pris en défaut. Le retour au mode stable peut s'effectuer lorsque le modèle gaussien est à nouveau pertinent, par exemple lorsque aucun événement improbable n'est apparu sur une période de temps déterminée. Dans le présent mode de réalisation, les sélecteurs peuvent donc contenir un certain nombre de règles de probabilité pour tester la mise en défaut et la pertinence du modèle gaussien, en vue de choisir quel correcteur utiliser.

Durant les périodes de stabilité à long terme, le dispositif fonctionne donc exactement comme explicité à la figure 1 grâce au correcteur proportionnel. En effet, la nouvelle donnée entrante, multipliée par un coefficient pondérateur, est incorporée à la gaussienne représentant le fond à l'aide d'une simple addition. L'équation de mise à jour de la moyenne μ du modèle est la suivante:

$$\mu_{n+1} = \alpha.x_n + (1-\alpha).\mu_n = \alpha.x_n + (1-\alpha).\alpha.x_{n-1} + (1-\alpha)^2.\alpha.x_{n-2} + ...$$

L'équation de mise à jour de la variance est identique. Ainsi avec un taux d'apprentissage de 0.01, la donnée entrante ne représente qu'un poids égal à 1% du total. Alors que durant les périodes de transition à court terme, le dispositif fonctionne comme explicité précédemment grâce au correcteur PID.

Comme mentionné précédemment, au correcteur PID de l'exemple de réalisation préférentiel ci-dessus peut être substitué un correcteur plus simple, comme par exemple un correcteur PI ou un correcteur PD.

La présente invention propose donc une toute nouvelle interprétation du rôle de la mise à jour du modèle gaussien. Jusqu'à présent, la mise à jour du modèle était vue comme une étape consistant à enrichir la population d'échantillons qui doit être modélisée: à chaque nouvelle donnée est attribuée une pondération qui reflète la confiance ou l'importance que l'on accorde à cet échantillon dans la population globale. La présente invention propose plutôt de considérer le fond, qui doit être modélisé au mieux, comme une entité évolutive sur laquelle est asservi un modèle gaussien, grâce à l'information apportée par chaque image. Pour cela, l'invention fait appel à des régulateurs inspirés du monde de l'automatique industriel, qui permettent de mettre à jour le modèle gaussien en fonction uniquement de la variabilité des données entrantes, c'est-à-dire sans paramétrage ou seuil empirique, tout en respectant au mieux les contraintes mathématiques imposées par le modèle probabiliste gaussien. Ainsi, l'invention met en oeuvre, dans le calcul de la mise à jour du modèle gaussien, non seulement une correction proportionnelle à l'erreur, c'est-à-dire proportionnelle à l'écart entre le modèle et les données courantes, mais aussi et surtout un ensemble de techniques qui permettent de contrôler une grandeur physique.

En d'autres termes, il s'agit d'utiliser des régulateurs complexes inspirés du monde de l'automatique industriel pour mettre à jour un modèle photométrique. Le modèle photométrique, qui représente le système à réguler, est ainsi asservi sur les données images entrantes; qui représentent les consignes.

Le dispositif selon l'invention décrit précédemment a encore pour principaux avantages que les seules données nécessaires à son fonctionnement sont, outre la moyenne et la variance du modèle gaussien, les données fournies par l'analyse de l'image courante. Et il fournit en sortie un nouveau modèle gaussien défini par sa moyenne et sa variance. Par ailleurs, il n'utilise pour son fonctionnement que des données locales de l'image.

## Revendications

1. Dispositif pour mettre à jour un modèle photométrique d'une scène de fond observée par une caméra, le modèle photométrique incluant au moins un modèle gaussien d'une grandeur physique mesurable dans un pixel ou dans un bloc de pixels d'une image fournie par la caméra, le modèle gaussien étant défini par la moyenne et la variance de la grandeur physique, le dispositif comportant:

   - des moyens pour calculer la moyenne à partir de la valeur courante de la grandeur physique mesurée dans le pixel ou le bloc de pixels de l'image, lesdits moyens incluant un premier sommateur (4) monté en boucle fermée, et;
   - des moyens pour mesurer l'écart entre la moyenne et la valeur courante de la grandeur physique, lesdits moyens incluant un deuxième sommateur (2), et;
   - des moyens pour réduire l'écart, lesdits moyens incluant un régulateur automatique (25);

   le premier sommateur, le deuxième sommateur et le régulateur automatique étant assemblés dans une boucle fermée d'asservissement du premier sommateur (4) de manière à mettre à jour le modèle lentement en période de stabilité de la scène observée et rapidement en période de transition de la scène observée, de sorte que le modèle reste fidèle à la scène observée quelle que soit la vitesse de fluctuation de la grandeur physique, le dispositif étant **caractérisé en ce que** le régulateur automatique (25) inclut un régulateur PI ou PD ou PID.

2. Dispositif selon la revendication 1, **caractérisé en ce que**, la caméra étant fixe, le dispositif comporte des moyens pour soustraire le modèle photométrique à l'image fournie par la caméra, de manière à détecter, dans ladite image, des évènements superposés à la scène de fond.

3. Dispositif selon la revendication 1, **caractérisé en ce que** la grandeur physique est la luminosité ou une composante couleur.

4. Dispositif selon la revendication 1, **caractérisé en ce que** le régulateur PID est réglé par la méthode de Takahashi.

5. Dispositif selon la revendication 1, **caractérisé en ce que** le régulateur automatique (25) inclut:

   - un correcteur proportionnel, et;
   - un correcteur PID, et;
   - au moins un sélecteur pour:

      o commuter vers le correcteur proportionnel pendant les périodes de stabilité de la scène observée, et;
      o commuter vers le correcteur PID pendant les périodes de transition de la scène observée.

6. Dispositif selon la revendication 5, **caractérisé en ce que** le sélecteur:

   - commute vers le correcteur PID si un événement improbable est détecté;
   - commute vers le correcteur proportionnel si aucun événement improbable n'est détecté durant un intervalle de temps prédéterminé.

7. Dispositif selon la revendication 6, **caractérisé en ce qu'**un évènement improbable est un évènement ayant une probabilité d'occurrence inférieure à un seuil prédéterminé.

## Patentansprüche

1. Vorrichtung zum Aktualisieren eines fotometrischen Modells einer von einer Kamera beobachteten Hintergrundszene, wobei das fotometrische Modell wenigstens ein Gaußsches Modell einer physikalischen Größe beinhaltet, die in einem Pixel oder in einem Pixelblock eines von der Kamera gelieferten Bildes gemessen werden kann, wobei das Gaußsche Modell durch den Mittelwert und die Varianz der physikalischen Größe definiert wird, wobei die Vorrichtung Folgendes umfasst:

- Mittel zum Berechnen des Mittelwerts anhand des laufenden Werts der physikalischen Größe, die in dem Pixel oder dem Pixelblock des Bildes gemessen wird, wobei die Mittel ein erstes Addierglied (4) aufweisen, das in einem geschlossenen Kreis geschaltet ist, und
- Mittel zum Messen der Differenz zwischen dem Mittelwert und dem laufenden Wert der physikalischen Größe, wobei die Mittel ein zweites Addierglied (2) beinhalten, und
- Mittel zum Reduzieren der Differenz, wobei die Mittel einen automatischen Regler (25) beinhalten;

wobei das erste Addierglied, das zweite Addierglied und der automatische Regler in einem geschlossenen Regelkreis des ersten Addierglieds (4) montiert sind, um das Modell in einer Stabilitätsperiode der beobachteten Szene langsam und in einer Übergangsperiode der beobachteten Szene schnell zu aktualisieren, so dass das Modell der beobachteten Szene unabhängig von der Änderungsgeschwindigkeit der physikalischen Größe treu bleibt, wobei die Vorrichtung **dadurch gekennzeichnet ist, dass** der automatische Regler (25) einen PI- oder PD- oder PID-Regler enthält.

2. Vorrichtung nach Anspruch 1, **dadurch gekennzeichnet, dass** die Vorrichtung, da die Kamera fest ist, Mittel zum Subtrahieren des fotometrischen Modells von dem von der Kamera bereitgestellten Bild umfasst, um in dem Bild auf der Hintergrundszene überlagerte Ereignisse zu erkennen.

3. Vorrichtung nach Anspruch 1, **dadurch gekennzeichnet, dass** die physikalische Größe die Helligkeit oder eine Farbkomponente ist.

4. Vorrichtung nach Anspruch 1, **dadurch gekennzeichnet, dass** der PID-Regler mit der Takahashi-Methode geregelt wird.

5. Vorrichtung nach Anspruch 1, **dadurch gekennzeichnet, dass** der automatische Regler (25) Folgendes beinhaltet :

einen Proportionalkorrektor, und
einen PID-Korrektor, und
wenigstens einen Selektor zum:

Schalten auf den Proportionalkorrektor in Stabilitätsperioden der beobachteten Szene, und
Schalten auf den PID-Korrektor in Übergangsperioden der beobachteten Szene.

6. Vorrichtung nach Anspruch 5, **dadurch gekennzeichnet, dass** der Selektor:

auf den PIC-Korrektor schaltet, wenn ein unwahrscheinliches Ereignis erkannt wird;
auf den Proportionalkorrektor schaltet, wenn während eines vorbestimmten Zeitintervalls kein unwahrscheinliches Ereignis erkannt wird.

7. Vorrichtung nach Anspruch 6, **dadurch gekennzeichnet, dass** ein unwahrscheinliches Ereignis ein Ereignis mit einer Auftretenswahrscheinlichkeit ist, die geringer ist als ein vorbestimmter Schwellenwert.

**Claims**

1. A device for updating a photometric model of a background scene observed by a camera, said photometric model including at least one Gaussian model of a physical variable that can be measured in a pixel or in a block of pixels of an image supplied by said camera, said Gaussian model being defined by the mean and the variance of the physical variable, said device comprising:

- means for calculating the mean on the basis of the current value of the physical variable measured in the pixel or the block of pixels of the image, said means including a first adder (4) assembled in a closed loop; and
- means for measuring the difference between the mean and the current value of the physical variable, said means including a second adder (2); and
- means for reducing the difference, said means including an automatic controller (25);

said first adder, said second adder and said automatic controller being assembled in a closed control loop of said first adder (4) so as to slowly update the model during a period of stability of the observed scene and quickly update the model during a period of transition of the observed scene, so that said model remains true to the observed scene regardless of the fluctuation speed of the physical variable, said device being **characterised in that** said automatic controller (25) includes a PI or PD or PID controller.

2. The device according to claim 1, **characterised in that**, with said camera being fixed, said device comprises means for subtracting the photometric model from the image supplied by the camera so as to detect, in said image, events superposed on the background scene.

3. The device according to claim 1, **characterised in that** the physical variable is the luminosity or a colour component.

4. The device according to claim 1, **characterised in that** the PID controller is controlled by the Takahashi method.

5. The device according to claim 1, **characterised in that** said automatic controller (25) includes:

   a proportional corrector; and
   a PID corrector; and
   at least one selector for:

      switching to said proportional corrector during periods of stability of the observed scene; and
      switching to the PID corrector during periods of transition of the observed scene.

6. The device according to claim 5, **characterised in that** said selector:

   switches to said PID corrector if an unlikely event is detected;
   switches to said proportional corrector if no unlikely event is detected during a predetermined time interval.

7. The device according to claim 6, **characterised in that** an unlikely event is an event having a likelihood of occurrence below a predetermined threshold.

FIG.1

FIG.2

EP 2 534 642 B1

**EP 2 534 642 B1**

## RÉFÉRENCES CITÉES DANS LA DESCRIPTION

**Documents brevets cités dans la description**

- US 2007280540 A1